(19) Europäisches Patentamt
European Patent Office
Office européen des brevets

(11) **EP 2 006 126 B1**

(12) **EUROPÄISCHE PATENTSCHRIFT**

(45) Veröffentlichungstag und Bekanntmachung des Hinweises auf die Patenterteilung:
**12.06.2013 Patentblatt 2013/24**

(51) Int Cl.:
**B60C 27/00** *(2006.01)*      **B60C 23/06** *(2006.01)*

(21) Anmeldenummer: **08154126.0**

(22) Anmeldetag: **07.04.2008**

(54) **Verfahren zum Erkennen einer auf einem angetriebenen Kraftfahrzeugrad montierten Schneekette**

Method for detecting a snow chain mounted on a powered motor vehicle wheel

Procédé de détection d'une chaîne à neige montée sur une roue de véhicule entraînée

(84) Benannte Vertragsstaaten:
**DE FR GB IT**

(30) Priorität: **22.06.2007 DE 102007028757**

(43) Veröffentlichungstag der Anmeldung:
**24.12.2008 Patentblatt 2008/52**

(73) Patentinhaber: **Bayerische Motoren Werke Aktiengesellschaft**
**80809 München (DE)**

(72) Erfinder: **Ammann, Dario**
**80797 München (DE)**

(56) Entgegenhaltungen:
**DE-A1- 3 701 087    DE-A1- 10 358 089**

**Beschreibung**

Die Erfindung betrifft ein Verfahren zum Erkennen einer auf einem angetriebenen Kraftfahrzeugrad montierten Schneekette, indem eine mittels eines Sensors messbare Bewegung des Rades relativ zum Fahrzeug-Aufbau mittels eines Rechenprozesses hinsichtlich sich wiederholender Muster im Sensorsignal-Verlauf ausgewertet wird. Zum bekannten Stand der Technik wird auf die DE 103 58 089 A1 verwiesen, die den Oberbegriff des Anspruchs 1 bildet.

Es kann an einem Kraftfahrzeug von großer Wichtigkeit sein, dass selbsttätig erkannt wird, ob auf den angetriebenen Rädern Schneeketten montiert sind. Beispielsweise kann es bei einem zweispurigen Kraftfahrzeug mit Heckantrieb und geringfügig lenkbaren Hinterrädern erforderlich sein, im Falle montierter Schneeketten mangels ausreichendem Freiraum keinen Lenkeinschlag der Hinterräder zuzulassen. Weiterhin kann die Information über montierte Schneeketten in Fahrdynamik-Regelsystemen im Hinblick auf eine ggf. angepasste Regelung mit montierter Schneekette verwendet werden.

In der eingangs genannten DE 103 58 089 A1 ist ein Verfahren zur Erkennung von an Kraftfahrzeug-Rädern montierten Schneeketten beschrieben, wonach in einer Auswerteeinheit sich wiederholende Muster in SensorSignalen bezüglich der Geschwindigkeit und/oder der Beschleunigung der einzelnen Räder mittels eines Rechenprozesses detektiert werden. Konkret werden dabei Autokorrelationsfunktionen auf die Radumdrehung, die Radbeschleunigung und/oder die Radgeschwindigkeit angewandt, wobei unter einer Autokorrelationsfunktion eine mathematische Funktion verstanden wird, die sich wiederholende Muster in einem Signalverlauf bestimmen kann.

Es kann davon ausgegangen werden, dass zum Auffinden der Autorkorrelationsfunktion wie üblich die inverse Fouriertransformation des Autoleistungsspektrums berechnet wird. Dieses Autokorreiations-Verfahren erfordert jedoch einen hohen Rechenaufwand und somit immense Ressourcen einer im Fahrzeug vorgesehenen elektronischen Rechenund Steuereinheit und liefert darüber hinaus bei stark unharmonischen Signalen unbefriedigende Ergebnisse.

Ein demgegenüber verbessertes Verfahren nach dem Oberbegriff des Anspruchs 1 aufzuzeigen, ist Aufgabe der vorliegenden Erfindung.

Die Lösung dieser Aufgabe ist dadurch gekennzeichnet, dass über die gemessene Bewegung des angetriebenen Rades eine Schwingungs-Approximation durchgeführt wird und dass die so ermittelte Schwingung mit einer analog für ein mit Sicherheit nicht mit einer Schneekette ausgerüstetes Rad ermittelten Schwingung hinsichtlich Amplitude und/oder Frequenz verglichen wird, wobei aus signifikanten Unterschieden zwischen den beiden genannten Schwingungen, nämlich derjenigen des hinsichtlich des Vorhandenseins einer Schneekette zu überprüfenden Rades sowie derjenigen des mit Sicherheit nicht mit einer Schneekette ausgerüsteten Rades, auf das Vorhandensein einer Schneekette geschlossen wird. Insbesondere wird es sich bei dem mit Sicherheit nicht mit einer Schneekette ausgerüsteten Rad um ein nicht angetriebenes Rad des Fahrzeugs handeln, das sich im Falle einer Analyse bezüglich einzelner Räder des Fahrzeugs vorzugsweise auf der gleichen Seite des Fahrzeugs befindet wie das hinsichtlich des Vorhandenseins einer Schneekette zu überprüfende Rad. Im Übrigen ist an einem zwei- oder mehrspurigen Fahrzeug dieses Verfahren aber auch achsindividuell durchführbar, d.h. bspw. dass für einen PKW mit Heckantrieb jeweils eine Schwingungsapproximation für die Hinterräder sowie für die Vorderräder durchgeführt wird und dass dann die beiden so gewonnenen Schwingungen hinsichtlich Amplitude und/oder Frequenz miteinander verglichen werden.

Anstelle eines Autokorrelation-Verfahrens erfolgt somit eine Schwingungs-approximation, die an sich einfach durchführbar ist, indem aus einer Vielzahl von Messpunkten bzw. Sensorsignalen (= sog. Sensorsignal-Verlauf), die am hinsichtlich des Vorhandenseins einer Schneekette zu überprüfenden Rades aufgenommen wurden, bspw. auf später noch kurz beschriebene Weise eine Schwingung approximiert wird. Kennzeichnende Größen dieser Schwingung sind deren Frequenz und deren Amplitude. Ebenso wird bezüglich eines Rades des Fahrzeugs verfahren, welches mit Sicherheit nicht mit einer Schneekette ausgerüstet ist, also insbesondere mit einem nicht angetriebenen Rad des Fahrzeugs. Daraufhin können die beiden approximierten Schwingungen, nämlich diejenige des hinsichtlich einer Schneekette zu überprüfenden Rades und diejenige des nicht angetriebenen Rades miteinander verglichen werden, und zwar einfach hinsichtlich Amplitude und/oder Frequenz. Liegt hier ein signifikanter Unterschied vor, so wird erfindungsgemäß darauf geschlossen, dass am hinsichtlich des Vorhandenseins einer Schneekette zu überprüfenden eine Schneekette montiert ist.

Grundsätzlich kann es sich bei der mittels eines Sensors gemessen bzw. überwachten Bewegung des Rades, aus welcher der Sensorsignal-Verlauf ermittelt wird, um die Rotationsbewegung des Rades, d.h. dessen Abrollen auf der Fahrbahn, oder um die Vertikalbewegung des Rades gegenüber dem Fahrzeug-Aufbau, d.h. die Ein- und Ausfeder-Bewegung handeln. Selbstverständlich ist es auch möglich, sowohl die Rotationsbewegung als auch die Vertikalbewegung heranzuziehen, jedoch jeweils getrennt voneinander, d.h. es werden dann sowohl hinsichtlich der Rotationsbewegungen der miteinander zu vergleichenden Räder als auch hinsichtlich deren Vertikalbewegungen die jeweils erforderlichen Schwingungs-Approximationen separat durchgeführt. Was dabei die Bewegung betrifft, so kann die Schwingungs-approximation hinsichtlich des jeweiligen Weges oder der jeweiligen Geschwindigkeit oder der jeweiligen Beschleunigung durchgeführt werden.

Es kann der besagte Vergleich der approximierten Schwingungen entweder radindividuell und dann vorzugs-

EP 2 006 126 B1

weise bezüglich der Räder auf der gleichen Fahrzeugseite durchgeführt werden, d.h. dass bei einem heckgetriebenen Fahrzeug quasi der Sensorsignal-Verlauf (genauer die approximierte Schwingung hiervon) bspw. des linken Hinterrades hinsichtlich Amplitude und/oder Frequenz mit demjenigen (genauer derjenigen) des linken Vorderrades verglichen wird. Es ist aber auch möglich, diesen Vergleich achsbezogen durchzuführen, d.h. im Falle eines heckgetriebenen Fahrzeug wird die für die Hinterräder aus den beiden an diesen gewonnenen Sensorsignal-Verläufen approximierte Schwingung hinsichtlich Amplitude und/oder Frequenz mit der aus den an den beiden Vorderrädern gewonnenen Sensorsignal-Verläufen approximierten Schwingung verglichen.

Im Sinne einer vorteilhaften Weiterbildung können bekannte systembedingte Unterschiede zwischen der Schwingung des oder der mit Sicherheit nicht mit einer Schneekette ausgerüsteten Rades oder Räder und derjenigen des (oder der) hinsichtlich des Vorhandenseins einer Schneekette zu überprüfenden Rades oder Räder beim Vergleich der ermittelten Schwingungen mit berücksichtigt werden. Derartige systembedingte Unterschiede können beispielsweise vorliegen, wenn die ggf. mit einer Schneekette ausgerüsteten angetriebenen Räder des Fahrzeugs mit Reifen anderer Größe ausgerüstet sind als die nicht angetriebenen (und daher mit Sicherheit nicht mit einer Schneekette ausgerüsteten) Räder.

Vorzugsweise kann in diesem Sinne ein Mittelwert der approximierten Schwingung subtrahiert werden, um eine hier sog. "reine" Schwingung zu ermitteln, so dass hierdurch der Einfluss von unterschiedlichen Raddurchmessern bspw. zwischen den Reifen der Vorderachse und der Hinterachse des Fahrzeugs bereits im wesentlichen eliminiert sein sollte. Um jedoch mögliche Besonderheit an nur einem Rad einem Achse erkennen zu können, so bspw. im Falle eines montierten Notrades oder falls nur eine einzige Schneekette am Fahrzeug montiert sein sollte, kann das vorgeschlagene Verfahren auf sämtliche Räder des Fahrzeugs einzeln angewandt werden. Auch kann eine radindividuelle Durchführung des Verfahrens einer Plausibilisierung dienen, indem bspw. ein Vergleich zwischen dem linken Vorderrad und dem linken Hinterrad gegen den Vergleich zwischen rechtem Vorderrad mit rechtem Hinterrad HR plausibilisiert wird, oder indem die Schwingungs-Approximation für das linke Vorderrad mit derjenigen für das rechte Vorderrad plausibilisiert wird und danach der Vergleich mit der Schwingungs-Approximation für das linke Hinterrad durchgeführt wird, welche jedoch zuvor mit derjenigen für das rechte Hinterrad plausibilisiert wurde.

Was die Durchführung der Schwingungsapproximation betrifft, so kann diese in einfachster Weise bspw. folgendermaßen durchgeführt werden:

Es sei die Drehzahl des jeweiligen Rades mit "$\Omega$" bezeichnet, die Zeit mit dem Buchstaben "t", und die Abtastrate der zu approximierenden Schwingung mit "dt". Mit einer Tiefpass-Filterung der Raddrehzahl, die als "TP($\Omega$)" bezeichnet wird, ergibt sich eine zu approximierende Schwingung "$S_{app}$" mit den Schwingungs-Parametern "A", "B", "C", "D" wie folgt:

$$S_{app} = A * \sin (B * \Omega * t + C) + D - TP(\Omega)$$

Dabei stellt "A" die Amplitude der Schwingung, "B" deren Frequenzfaktor, "C" deren Phase und "D" einen Offset dar. Mit "sin" ist die Sinusfunktion bezeichnet und die Zeichen "*" bzw. "+" sehen für eine Multiplikation bzw. Addition.

Der mittels eines Sensors gemessene Schwingungsverlauf hingegen ist durch eine Vielzahl von Messpunkten $S_{gem}$ bekannt, die beispielsweise die Rad-Drehzahl oder die Radbeschleunigung oder den Rad-Höhenstand repräsentieren:

$$[S_{gem}1; t1=0]; [S_{gem} 2; t2=dt]; [S_{gem}3, t3 = 2 * dt]; ….; [S_{gem}N; tN = (N-1) * dt]$$

Liegen lediglich vier solcher Messpunkte vor, so wäre eine einfache Lösung der obigen Schwingungsgleichung für $S_{app}$ möglich, indem einfach die vier Schwingungsparameter A, B, C, D rechnerisch bestimmt werden. Hier dürfte jedoch die Genauigkeit zu wünschen übrig lassen, weswegen in der Regel eine Vielzahl von Messpunkten $S_{gem}$ verwendet wird, auf die dann eine geeignete Approximationsmethode angewandt wird. Bspw. bzw. vorzugsweise kann eine solche Approximation von $S_{app}$ nach der Methode der kleinsten Fehler- Quadrate durchgeführt werden.

Das hier beschriebene Verfahren zeichnet sich durch geringen Rechenaufwand aus und liefert auch bei stark unharmonischen Signalen brauchbare Resultate. Vorteilhafterweise werden nur üblicherweise bereits vorhandene Sensoren, nämlich die Raddrehzahl-Sensoren, benötigt, wobei noch darauf hingewiesen sei, dass durchaus eine Vielzahl von Details abweichend von obigen Erläuterungen gestaltet sein kann, ohne den Inhalt der Patentansprüche zu verlassen.

3

**Patentansprüche**

1. Verfahren zum Erkennen einer auf einem angetriebenen Kraftfahrzeugrad montierten Schneekette, indem eine mittels eines Sensors messbare Bewegung des Rades relativ zum Fahrzeug-Aufbau mittels eines Rechenprozesses hinsichtlich sich wiederholender Muster im Sensorsignal-Verlauf ausgewertet wird, **dadurch gekennzeichnet, dass** über die gemessene Bewegung des angetriebenen Rades eine Schwingungs-Approximation durchgeführt wird und dass die so ermittelte Schwingung mit einer analog für ein mit Sicherheit nicht mit einer Schneekette ausgerüstetes Rad ermittelten Schwingung hinsichtlich Amplitude und/oder Frequenz verglichen wird, wobei aus signifikanten Unterschieden zwischen den beiden genannten Schwingungen, nämlich derjenigen des hinsichtlich des Vorhandenseins einer Schneekette zu überprüfenden Rades sowie derjenigen des mit Sicherheit nicht mit einer Schneekette ausgerüsteten Rades, auf das Vorhandensein einer Schneekette geschlossen wird.

2. Verfahren nach Anspruch 1, **dadurch gekennzeichnet, dass** es sich bei der gemessen Bewegung des Rades um dessen Rotationsbewegung und/oder um dessen Vertikalbewegung handelt.

3. Verfahren nach Anspruch 1 oder 2, **dadurch gekennzeichnet, dass** der Vergleich bezüglich der Räder auf der gleichen Fahrzeugseite durchgeführt wird.

4. Verfahren nach einem der vorangegangenen Ansprüche, **dadurch gekennzeichnet, dass** bekannte systembedingte Unterschiede zwischen der Schwingung des nicht angetriebenen Rades und derjenigen des angetriebenen und bekanntermaßen nicht mit einer Schneekette ausgerüsteten Rades beim Vergleich der ermittelten Schwingungen mit berücksichtigt werden.

5. Verfahren nach einem der vorangegangenen Ansprüche, **dadurch gekennzeichnet, dass** die Schwingungs-Approximation nach der Methode der kleinsten Fehler-Quadrate durchgeführt wird.

**Claims**

1. A method for detecting a snow chain mounted on a driven motor vehicle wheel, in that a movement of the wheel, which can be measured by means of a sensor, relative to the vehicle bodywork is evaluated by means of a computing process with respect to repeating patterns in the sensor signal variation, **characterised in that** an oscillation approximation is carried out by means of the measured movement of the driven wheel and **in that** the oscillation thus determined is compared with respect to amplitude and/or frequency with an oscillation determined analogously for a wheel certainly not equipped with a snow chain, the presence of a snow chain being inferred from significant differences between the two oscillations mentioned, namely that of the wheel to be checked with regard to the presence of a snow chain and of the wheel certainly not equipped with a snow chain.

2. A method according to claim 1, **characterised in that** the measured movement of the wheel is its rotational movement and/or its vertical movement.

3. A method according to claim 1 or 2, **characterised in that** the comparison with respect to the wheels is carried out on the same vehicle side.

4. A method according to any one of the preceding claims, **characterised in that** known system-related differences between the oscillation of the non-driven wheel and that of the driven wheel known not to be equipped with a snow chain are also taken into account in the comparison of the oscillations determined.

5. A method according to any one of the preceding claims, **characterised in that** the oscillation approximation is carried out by the method of the least error squares.

**Revendications**

1.  Procédé pour détecter une chaîne-neige installée sur une roue motrice de véhicule en ce qu'à l'aide d'un procédé de calcul on exploite le mouvement de la roue par rapport à la carrosserie du véhicule, mesuré par un capteur pour le motif répétitif de la forme du signal de capteur, procédé **caractérisé en ce qu'**

    - on effectue une approximation d'oscillation du mouvement mesuré de la roue entraînée, et
    - on compare l'amplitude et/ou la fréquence de l'oscillation ainsi déterminée à une oscillation déterminée de manière analogue pour une roue certainement non-équipée d'une chaîne-neige, et
    - à partir des différences significatives entre les deux oscillations à savoir celle de la roue pour laquelle on vérifie la présence d'une chaîne-neige et celle de la roue qui est certainement non-équipée d'une chaîne-neige, pour conclure à l'existence d'une chaîne-neige.

2.  Procédé selon la revendication 1,
    **caractérisé en ce que**
    le mouvement mesuré de la roue est son mouvement de rotation et/ou son mouvement vertical.

3.  Procédé selon la revendication 1 ou 2,
    **caractérisé en ce que**
    la comparaison des roues est faite sur le même côté du véhicule.

4.  Procédé selon l'une des revendications précédentes,
    **caractérisé en ce que**
    pour la comparaison des oscillations déterminées, on tient compte des différences systématiques connues entre l'oscillation de la roue non-motrice et de la roue motrice et qui, de manière connue, n'est pas équipée d'une chaîne-neige.

5.  Procédé selon l'une des revendications précédentes,
    **caractérisé en ce qu'**
    on effectue l'approximation de l'oscillation selon la méthode des moindres carrés d'erreurs.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10358089 A1